# EUROPEAN PATENT APPLICATION

(11) **EP 2 068 588 A1**
(43) Date of publication of application: **10.06.2009**
(21) Application number: 07023374.7
(22) Date of filing: 03.12.2007
(51) Int. Cl.: H04W 4/00

(54) **Method and device for determining an RNC information and communication system comprising such device**

(71) Applicant: Nokia Siemens Networks Oy, 02610 Espoo (FI)
(72) Inventor: Lutterbach, Manfred, 86415 Mering (DE); Pieroth, Mathias, Dr., 81541 München (DE)
(74) Representative: Bruglachner, Thomas E.

(57) **Abstract**

A method and a device are provided for determining an RNC information, wherein a femto access point receives a UTRAN identity and derives the RNC information from said UTRAN identity. Furthermore, a communication system is provided comprising such a device.

## Description

The invention relates to a method and to a device for determining an RNC information and to a communication system comprising such a device.

Pursuant to developments of cellular networks, UMTS indoor coverage shall be improved and new business opportunities for mobile operators emerge by supplementing their cellular network, e.g., UMTS, by a so-called "femto system".

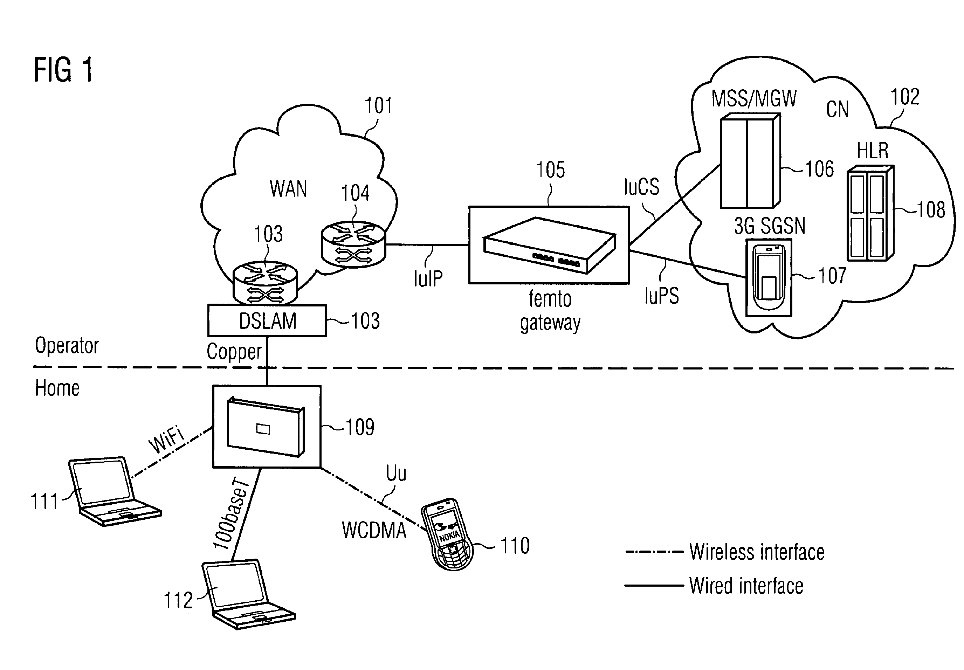

An exemplary architecture of a radio access network (RAN) comprising a femto system is shown in **Fig.1****.**

Fig.1 shows a Wide Area Network WAN 101 that is connected via a gateway 104 and a femto gateway 105 to a core network CN 102. The femto gateway 105 is further connected to a 3G Serving GPRS Support Node (SGSN) 107 and to a Media Gateway MGW 106.

A Digital Subscriber Line Access Multiplexer DSLAM 103 connects the WAN 101 and a femto access point 109. In this scenario, the femto access point 109 comprises an xDSL gateway and 3G access and it may also comprise WiFi access features.

A computer 111 is connected via a WiFi interface to the femto access point 109 and a computer 112 is connected via a wired interface with the femto access point 109. A mobile terminal 110 is connected via a Uu interface utilizing WCDMA with the femto access point 109.

It is to be noted that a femto system may comprise a femto access point FAP (also referred to as a femto cell or femto base station) and optionally a femto gateway FGW to which several femto access points are connected or assigned to.

The radio access network of Fig.1 in particular comprises the following properties:
- The femto system is connected to a UMTS core network CN via the femto gateway FGW. From the UMTS core network's perspective, the femto gateway FGW acts or behaves like a UTRAN RNC.
- The femto gateway FGW concentrates traffic of several femto access points FAPs, e.g., one femto gateway FGW may be connected to 20.000 femto access points.
- The femto access point is a home transceiver station which can be purchased and installed by UMTS users, comparable to the installation process of today's DSL WLAN Routers.
- The femto access point provides a Uu radio interface, i.e. any authorized UMTS mobile may get connected to this femto access point, enter the femto cell and obtain services provided.
- Femto cells may be small in size. A typical size may extend to a diameter of about 30 meters.

As long as the user is outside the home environment, the user receives mobile services from the UMTS cellular network via macro cells (provided by macro cell base station). If the user stays at home, he receives the same (or better) services via the femto access point.

However, there are particular difficulties when it comes to handover and/or relocation issues from the femto system to the macro system, i.e. from the femto access point to the macro cell base station or vice versa.

A detailed (offline and long lasting) network planning as provided for the macro system is not feasible for the femto system, e.g., because of the multitude of possibilities where a user will install and run his femto access point.

The problem to be solved is to overcome the disadvantages as stated before and in particular to provide an approach that allows for the femto access point to determine adjacent macro cells that may in particular be utilized for handover of a mobile terminal from the femto access point to a macro cell or vice versa.

This problem is solved according to the features of the independent claims. Further embodiments result from the depending claims.

In order to overcome this problem, a method for determining an RNC information is provided, wherein a femto access point receives a UTRAN identity and derives the RNC information from said UTRAN identity.

It is to be noted that a femto access point may be a or may be associated with a home NodeB, a home base station, a femto cell or a femto base station. Such femto access point may in particular be subject to evaluation within the context of 3.5G (HSPA/WCDMA) ("3.5G home NodeB") and LTE ("LTE home NodeB"). The home NodeB may in particular be deployed as an end-user type of equipment and hence to a certain extent self-installation/organization functionality may be required and/or advantageous for such a device, in contrast to coordinated operator driven network-planning for macro-deployments.

Hence, the approach provided herewith allows the femto system, in particular the femto access point, to determine and/or gather information relating to adjacent neighbor macro cells of the radio access network (e.g., 2G, 2.5G and/or 3G networks).

This can advantageously be achieved by scanning the radio environment(s). The femto access point may in particular gather and/or collect parameters of a surrounding UTRAN system by, e.g., scanning its broadcast information and its common control information for UTRAN identities, wherein said parameters can be used for handover purposes. It is to be noted that some handover (HO) relevant parameters may be distributed via BCCH, however not the SRNC ID, which may in particular be obtained via CCCH scanning as described herein.

It is in particular of advantage that the femto access point can determine the RNC information that is based on the UTRAN cell identity information. In particular, the RNC information gathered may be an RNC identity, in particular an SRNC ID.

Such SRNC ID can be utilized for handover proceedings, i.e. the mobile terminal or user equipment may be handed over from the femto access point to the macro cell or vice versa.

This approach advantageously allows to efficiently obtain the RNC information from the macro cell to be thus utilized by the femto access point thereby avoiding in particular a costly mapping of RNC information to femto access point and downloading such data via O&M to each femto gateway and femto access point.

In an embodiment, the RNC information comprises an RNC identity, in particular a serving RNC (SRNC) identity.

In another embodiment, the UTRAN identity comprises a UTRAN Radio Network Temporary Identity (U-RNTI).

In a further embodiment, the femto access point derives the RNC information from data conveyed via a wireless interface.

Such data may in particular be directed to the femto access point and/or to a mobile terminal, in particular to a user equipment UE.

In a next embodiment, the femto access point derives the RNC information from at least one message conveyed via the wireless interface. The at least one message may comprise an RRC connection setup message. Such data conveyed via the wireless interface may in particular comprise traffic between at least one UE and at least one RNC.

Hence, the traffic between the UE and the RNC may be intercepted by the femto access point in order to derive the RNC identity required.

It is also an embodiment that the femto access point initiates data conveyed via a wireless interface.

Hence, as an alternative, the femto access point may actively convey information to a macro cell base station thereby in particular adopting a role of a mobile terminal, e.g. a UE.

Pursuant to another embodiment, the femto access point at least partially and/or temporarily adopts a role of a UE.

Hence, the addressee provides a response to the femto access point as if it were a UE and thus provides the femto base station with the required UTRAN identity from which the RNC information, in particular the serving RNC identity is derived.

According to an embodiment, the femto access point provides at least one RRC connection request message to at least one macro cell.

Such RRC message may be answered by a macro cell base station providing an RRC connection setup message comprising the UTRAN identity from which the serving RNC identity can be derived.

According to another embodiment, the femto access point receives at least one UTRAN identity as a response to the at least one RRC connection request message.

In yet another embodiment, the femto access point stores the UTRAN identity and the corresponding RNC information.

The femto access point may set up a table, wherein each entry comprises the RNC information and the UTRAN identity.

According to a next embodiment, said method is initiated pursuant to a predetermined time schedule.

Advantageously, the RNC information is determined on a more or less regular basis. It is in particular useful to iteratively determine the RNC information of adjacent macro cell base stations. This allows the femto access point to automatically become aware of any changes of the macro cell environment. In addition, the femto access point is able to adjust to any such change by initializing said procedure and to update its (serving) RNC identity entries together with the corresponding UTRAN identity.

Pursuant to yet an embodiment, said method is initiated pursuant to a trigger.

Hence, a particular trigger can be utilized to update the RNC information as described. Such trigger may be, e.g., a expiring timer (time-out), or a deficient handover.

A counter could be set up to cumulate deficient handovers over a given time interval. If such counter reaches a predetermined threshold value, determining of RNC information can be re-started (as a significant number of erroneous handovers may indicate that the macro cell base station environment has changed and needs to be updated by the femto access point).

Hence, according to an embodiment, said trigger indicates that an error occurred.

It is yet an embodiment that the femto access point is either in a normal mode or in a scanning mode, wherein the modes are toggled upon said trigger.

Preferably, the femto access point has one transmitter and one receiver. If the receiver is active scanning messages in order to determine RNC identities, such scanning mode may be exclusive. Once the scanning mode is concluded, the femto access point may switch to normal operation. Said receiver then is able to convey user's traffic. Hence, it may be useful to schedule the scanning mode at a time when there is no user data to be transmitted and/or received, in particular at a time when there is a considerably high likelihood for the femto base station to be idle. Such time could be determined by analyzing the user's profile over a given time period.

It may be an option that the femto access point comprises more than one receiver and/or more than one transmitter. This would allow the femto access point to convey (transmit and receive) user traffic (as in normal operation) and/or signaling traffic and in parallel to process scanning mode (whenever this is deemed necessary).

Hence, according to an embodiment, the femto access point comprises at least one transmitter and/or one receiver. The femto access point may in particular comprise several transmitters and/or several receivers.

Pursuant to a further embodiment, the femto access point triggers a mobile terminal to provide at least one UTRAN identity to the femto access point.

Advantageously, the femto access point utilizes the mobile terminal as a relay node to the macro cell base station and triggers the mobile terminal to provide the required information. This is useful if the femto access point itself has no direct or immediate radio connection to the macro cell base station, but to the mobile terminal which in return can reach said macro cell base station.

According to an embodiment, a handover is conducted from the femto access point to a macro cell associated with the RNC information.

Hence, the information obtained and derived can be successfully utilized to handover mobile terminal, which does not have to be the same mobile terminal, from the femto base station to the macro cell base station and/or vice versa.

According to yet a further embodiment, a handover is conducted from a femto access point to another femto access point.

Hence, the approach described herein can advantageously be utilized for handover between femto access points.

The problem stated above is also solved by a device for determining an RNC information comprising a processor unit that is equipped and/or arranged such that the method as described herein is executable on said processor unit.

According to an embodiment, the device is a communication device, in particular a femto access point.

The problem stated supra is further solved by a communication system comprising the device as described herein.

Embodiments of the invention are shown and illustrated in the following figures:
- Fig.2: shows the definition of the U-RNTI information element according to 3GPP TS 25.331;
- Fig.3: shows a diagram depicting a symbolic network scenario comprising a femto access point and two macro cell base stations, wherein traffic or signaling data between each macro cell base station and an (arbitrary) mobile terminal is monitored by the femto access point to derive an RNC information of the respective macro cell base station from an information element that is part of the message intercepted;
- Fig.4: is based on Fig.3 and visualizes the scenario of an actively communicating femto access point to obtain the RNC information, e.g., UTRAN identity and hence to derive the RNC identity;
- Fig.5: is based on Fig.3 and shows how the femto access point may utilize the mobile terminal in order to receive the information required from the macro cell base station, even if the femto access point itself has no radio connection to such macro cell base station.

This approach allows the femto access point to become aware of RNC identities (SRNC ID) of adjacent macro cells. The SRNC ID itself, however, is not transmitted via a broadcast channel, but a UTRAN identity information (U-RNTI) is an information element that is provided via a Uu interface. Said RNC identity (SRNC ID) can be derived from the UTRAN identity information (U-RNTI).

The approach provided herein in particular suggests to determine said SRNC ID by extracting it from the U-RNTI information element.

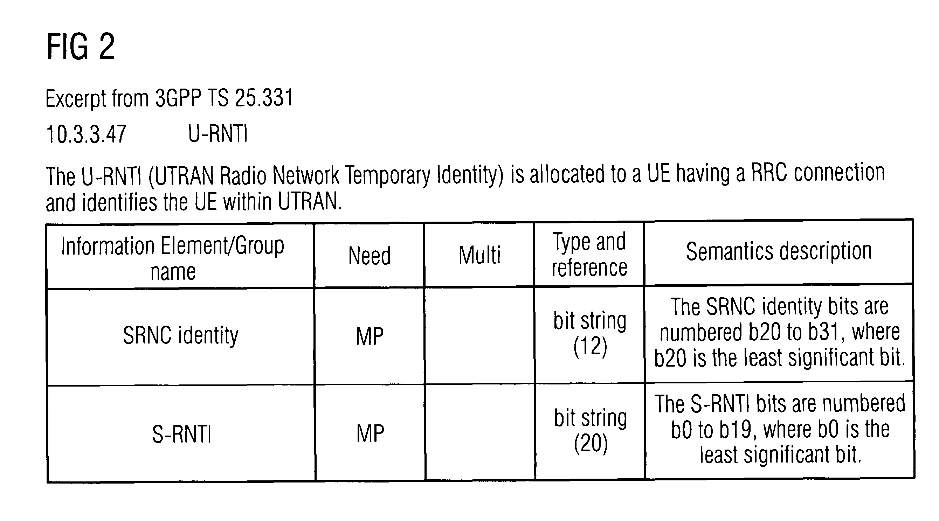

**Fig.2** shows the definition of the U-RNTI information element according to 3GPP TS 25.331.

The first 12 bits of the U-RNTI information element may in particular be the information as utilized by the femto access point.

The U-RNTI information element is in particular transmitted over the radio interface during RRC connection establishment and during cell update procedure.

Hereinafter, three embodiments are described as how the femto access point may obtain the SRNC ID by extracting it from the U-RNTI information element.

### Femto access point observes traffic

The femto access point detects the SRNC ID by observing the Uu traffic, in particular by reading the SRNC ID from the "RRC CONNECTION SETUP" message.

Hence, the femto access point may scan a radio environment to identify adjacent UTRAN cells.

The femto access point observes a downlink common control channel (CCCH) of a UTRAN cell and waits for a next "RRC CONNECTION SETUP" message sent by an RNC to an arbitrary user equipment.

It is to be noted, that the "RRC CONNECTION SETUP" message will be directed to the UE that has requested the RRC connection and not to the femto access point.

The femto access point reads (intercepts) the information element "New.U-RNTI" from "RRC CONNECTION SETUP" message, which is according to 3GPP TS 25.331 a mandatory information element.

The femto access point thus extracts the SRNC ID from the U-RNTI information element and associates it with the macro cell. Hence, the femto access point is aware of the RNC information (identity) of this macro cell and it may store such mapping information to be used for handover purposes.

Advantageously, this approach has no (traffic) impact on macro network since the femto access point has an observing role only. No transmission to the macro cell is required from the femto access point. This is in particular preferable in case the macro cell may operate on a different carrier than the femto access point.

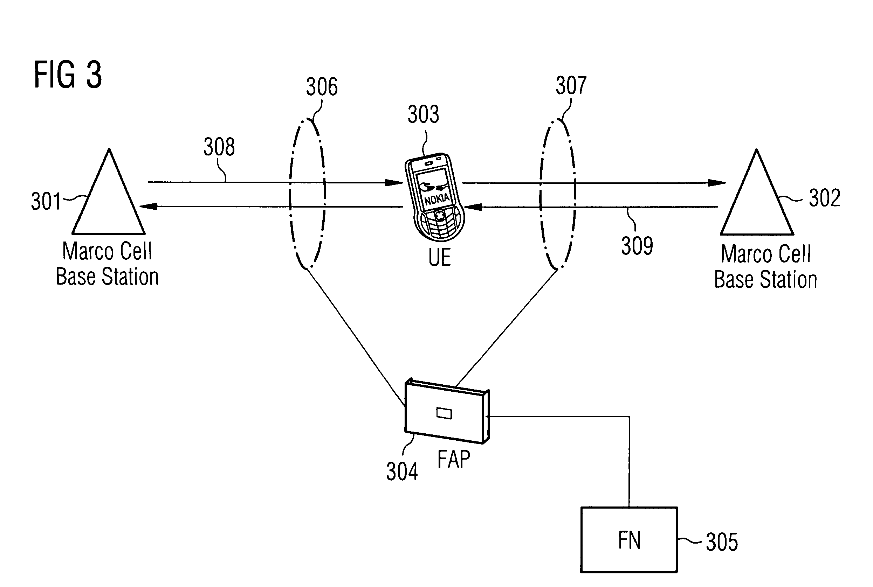

**Fig.3** shows a diagram depicting a symbolic network scenario comprising a femto access point FAP 304, a Macro Cell Base Station 301, a Macro Cell Base Station 302 and a mobile terminal UE 303. The femto access point FAP 304 is connected to a fixed network FN 305, e.g., to a digital subscriber line DSL.

As traffic between the Macro Cell Base Station 301, the Macro Cell Base Station 302 and the UE 303 is radiated via an air interface, the femto access point FAP 304 is able to listen to (intercept) such data conveyed as long as it is within reach. This is indicated by dashed ellipses 306 and 307 in Fig.3.

As indicated above, the Macro Cell Base Station 301 may convey an "RRC CONNECTION SETUP" message 308 to the UE 303. Receiving such message enables the femto access point FAP 304 to determine the SRNC ID from the U-RNTI information element that is part of said message and to store said RNC information. The same applies for the Macro Cell Base Station 302: The femto access point FAP 304 may receive an "RRC CONNECTION SETUP" message 309 sent to the UE 303 (or to any other UE) and it may derive the RNC information of the Macro Cell Base Station 302 from the information element provided by this intercepted message 309.

Thus, handover of a mobile terminal that is (temporarily) connected to the femto access point FAP 304 to either Macro Cell Base Station 301 or 302 is feasible as the femto access point FAP 304 is now aware the RNC identities of both Macro Cell Base Stations 301 and 302.

However, the handover can be also performed from one femto access point to another femto access point. Thus, information required for such inter-femto access point handover can be obtained and utilized in a similar manner as described herein.

### Femto access point initiates request for U-RNTI information element

As an alternative, the SRNC ID can be actively determined by the femto access point. In this case, the femto access point itself may trigger an RRC connection establishment by conveying an "RRC CONNECTION REQUEST" message.

In such case, the femto access point partially and/or temporarily adopts the role of a mobile terminal.

As a preliminary step, the femto access point shall scan for adjacent UTRAN macro cells. After having identified a UTRAN macro cell the femto access point may submit the "RRC CONNECTION REQUEST" message via an uplink CCCH of the UTRAN cell. The UTRAN macro cell assumes that the femto access point is a UE and provides an answer via the CCCH, i.e., an "RRC CONNECTION SETUP" message.

The femto access point reads the information element "New.U-RNTI" received by the "RRC CONNECTION SETUP" message, wherein "New.U-RNTI" may in particular be a mandatory information element.

The femto access point extracts the SRNC ID from the U-RNTI information element, associates and stores it with this particular macro cell.

The second approach permits determination of the SRNC ID by the femto access point whenever it is required. In other words, the femto access point may trigger - depending on various events - a determination of adjacent macro cells. Advantageously, such determination is conducted on a more or less regular basis in order to determine, e.g., whether the network environment has changed.

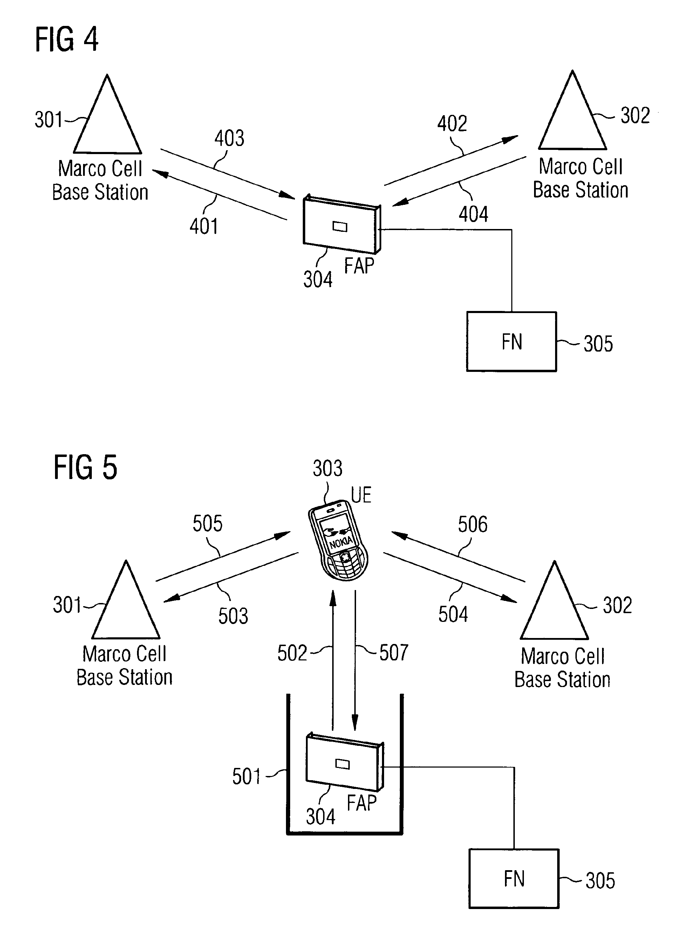

**Fig.4** is based on Fig.3 as explained above and visualizes the scenario of an actively communicating femto access point FAP 304.

The femto access point FAP 304 partially adopts the role of a mobile terminal (UE) and, after it has become aware of the existence of the Macro Cell Base Stations 301 and 302 conveys the "RRC CONNECTION REQUEST" messages 401 and 402 via uplink CCCHs.

The Macro Cell Base Stations 301 and 302 each provide an answer via downlink CCCH, i.e., the "RRC CONNECTION SETUP" messages 403 and 404.

Hence, the femto access point FAP 304 gets aware of the RNC IDs of the Macro Cell Base Stations 301 and 302, stores them (preferably in an internal database) and thenceforward is able to address either Macro Cell Base Stations 301 and 302 for handover purposes.

It is to be noted that the femto access point FAP 304 independently communicates with the Macro Cell Base Stations 301 and 302, i.e. such communication can be provided in parallel or in sequence or in combinations thereof.

### Mixed Solution

In principle, the embodiments described can be mixed, i.e. the femto access point FAP 304 may intercept information conveyed in the network and it may also take an active role in producing requests and receiving responses.

One particular example is depicted in **Fig.5****.** Again, there are the Macro Cell Base Stations 301 and 302, the femto access point FAP 304 and the UE 303 of Fig.1. However, this time, the femto access point FAP 304 utilizes the UE 303 to obtain the information required. Such scenario may be applicable if the femto access point FAP 304 has no direct access to a macro cell base station, although the femto access point FAP 304 is able to communicate with the UE 303, which has access to both Macro Cell Base Stations 301 and 302. This can be the case, if the femto access point FAP 304 is located in a basement 501 without any radio connection to a macro cell base station.

However, the femto access point FAP 304 may utilize this approach also in case of a feasible connection to a macro cell base station.

The femto access point FAP 304 may only have to send a message 502 to initiate the UE 303 to collect and/or request the required information from the Macro Cell Base Stations 301 and 302 within reach.

Upon receipt of message 502, the UE 303 can launch "RRC CONNECTION REQUEST" messages 503 and 504 towards Macro Cell Base Station 301 and Macro Cell Base Station 302.

The Macro Cell Base Stations 301 and 302 each provide an answer to the UE 303 via the downlink CCCH, i.e., the "RRC CONNECTION SETUP" messages 505 and 506.

These answers 505 and 506 are forwarded to the femto access point FAP 304 via a message 507.

As an alternative, the UE 303 may provide information to the femto access point 304 that may already exist at the UE 303 without any need for further requests to be conveyed to, e.g., a macro cell base station. For example, the UE 303 may directly transmit a (previous) U-RNTI via the message 507.

### Further implementation and advantages

It is noted that all kinds of messages may be utilized for this approach that allow determination of the RNC information.

The approach provided herein comprises in particular the following advantages:
(1) No mapping table between a cell identity and an SRNC ID has to be provided by Operation and Maintenance (O&M). Hence, a bulky and ineffective coupling of an O&M database of UTRAN with the femto system can be avoided.
(2) The femto gateway (see Fig.1) is not affected by this approach, i.e. there is no need for an expensive implementation needed to distribute and maintain SRNC ID data to a large number of femto access points.
(3) The approach is self-contained, no central planning or maintenance has to be provided.
(4) An OPEX for the femto system can be significantly reduced.
(5) The femto system can be fast and efficiently adapted if the macro environment changes.

### Abbreviations:

- CCCH: Common Control Channel
- CN: Core Network
- DSL: Digital Subscriber Line
- DSLAM: Digital Subscriber Line Access Multiplexer
- FAP: Femto Access Point
- FGW: Femto Gateway
- HLR: Home Location Register
- HO: Handover
- MGW: Media Gateway
- RAN: Radio Access Network
- RNC: Radio Network Controller
- RNTI: Radio Network Temporary Identity
- RRC: Radio Resource Control
- SGSN: Serving GPRS Support Node
- SRNC: Serving RNC
- UE: User Equipment
- UMTS: Universal Mobile Telecommunications System
- UTRAN: UMTS Terrestrial Radio Access Network

## Claims

1. A method for determining an RNC information, wherein a femto access point receives or obtains a UTRAN identity and derives the RNC information from said UTRAN identity.

2. The method according to any of the preceding claims, wherein the RNC information comprises a serving RNC identity.

3. The method according to any of the preceding claims, wherein the UTRAN identity comprises a UTRAN Radio Network Temporary Identity.

4. The method according to any of the preceding claims, wherein the femto access point derives the RNC information from data conveyed via a wireless interface.

5. The method according to claim 4, wherein the femto access point derives the RNC information from at least one message conveyed via the wireless interface.

6. The method according to claim 5, wherein the at least one message comprises an RRC connection setup message.

7. The method according to any of the claims 4 to 6, wherein the data conveyed via the wireless interface comprises traffic between at least one UE and at least one RNC.

8. The method according to any of the preceding claims, wherein the femto access point initiates data conveyed via a wireless interface.

9. The method according to claim 8, wherein the femto access point at least partially and/or temporarily adopts a role of a UE.

10. The method according to any of claims 8 or 9, wherein the femto access point provides at least one RRC connection request message to at least one macro cell.

11. The method according to claim 10, wherein the femto access point receives at least one UTRAN identity as a response to the at least one RRC connection request message.

12. The method according to any of the preceding claims, wherein the femto access point stores the UTRAN identity and the corresponding RNC information.

13. The method according to any of the preceding claims, wherein said method is initiated pursuant to a predetermined time schedule.

14. The method according to any of the preceding claims, wherein said method is initiated pursuant to a trigger.

15. The method according to claim 14, wherein said trigger indicates that an error occurred.

16. The method according to any of claims 14 or 15, wherein the femto access point is either in a normal mode or in a scanning mode, wherein the modes are switched upon said trigger.

17. The method according to any of the preceding claims, wherein the femto access point comprises at least one transmitter and/or one receiver.

18. The method according to any of the preceding claims, wherein the femto access point comprises several transmitters and/or several receivers.

19. The method according to any of the preceding claims, wherein the femto access point initiates a mobile terminal to provide at least one UTRAN identity to the femto access point.

20. The method according to any of the preceding claims, wherein a handover is conducted from the femto access point to a macro cell associated with the RNC information.

21. The method according to any of the claims 1 to 19, wherein a handover is conducted from a femto access point to another femto access point.

22. A device for determining an RNC information comprising a processor unit that is arranged such that the method according to any of the preceding claims is executable on said processor unit.

23. The device according to claim 22, wherein said device is a communication device, in particular a femto access point.

24. A communication system comprising the device according to any of the claims 22 or 23.
